# FASCICULE DE BREVET EUROPEEN

(11) **EP 1 772 087 B1**
(45) Date de publication et mention de la délivrance du brevet: **02.04.2008**
(21) Numéro de dépôt: 06356120.3
(22) Date de dépôt: 02.10.2006
(51) Int. Cl.: A47J 43/07

(54) **Pied de mixage et mixeur ménager de type plongeant muni d'un tel pied de mixage**
Stabmixer und eintauchender Haushaltsmixer mit einem solchen Stabmixer
Mixing rod and domestic mixing device of the immersing type with such a mixing rod

(30) Priorité: 04.10.2005 FR 0510120
(43) Date de publication de la demande: 11.04.2007
(73) Titulaire: SEB SA, 69130 Ecully (FR)
(72) Inventeur: Herbert, Philippe, 50290 Bréhal (FR); Hamelin, Franck, 50490 Saint Sauveur Lendelin (FR); Balan, Lionel, 50000 Saint Lô (FR)
(74) Mandataire: Kiehl, Hubert

(56) Documents cités:
- EP-A- 0 607 507

## Description

La présente invention concerne le domaine technique général des mixeurs ménagers du type plongeant et se rapporte plus particulièrement à un pied de mixage comportant une cloche de protection renfermant un outil rotatif amovible.

De tels pieds de mixage sont bien connus et utilisés couramment. Ils sont accouplés à un boîtier renfermant un moteur et comprennent un fût cylindrique dont la partie inférieure comporte une cloche renfermant un outil de mixage solidaire d'un arbre dont l'extrémité supérieure est accouplée à un arbre de sortie du moteur. Entraîné à grande vitesse, l'outil est plongé à l'intérieur des aliments à préparer et il coupe, mélange, émulsionne, etc.

Afin de faciliter le nettoyage et de permettre éventuellement l'utilisation de différents type d'outils, il est connu de monter l'outil coupant de manière facilement amovible sur l'arbre du pied de mixage, le démontage de l'outil s'effectuant manuellement sans nécessiter d'outil spécifique. Le document EP 0 607 507 divulgue par exemple une solution dans laquelle l'outil coupant est freiné sur l'arbre d'entraînement par une languette élastique et est bloqué par une goupille s'engageant dans une rainure présente sur le manchon de l'outil.

Un tel dispositif présente cependant l'inconvénient de rendre l'opération de montage de l'outil dangereuse, notamment lorsque l'outil est fortement coupant, l'utilisateur étant obligé de manipuler directement l'outil avec les doigts, au risque de se blesser.

L'invention qui suit vise à pallier ces inconvénients en proposant un pied de mixage dans lequel la manipulation de l'outil rotatif, notamment pour son assemblage sur le pied de mixage, est rendue plus sûre. Un but de la présente invention est également de proposer un pied de mixage dans lequel la fixation de l'outil rotatif est simplifiée.

Le but de l'invention est atteint par un pied de mixage comprenant une cloche de protection renfermant un outil rotatif amovible, l'outil étant destiné à être entraîné par un moteur porté par un boîtier, caractérisé en ce que l'outil est solidaire d'une pièce de préhension sur laquelle il est monté rotatif, la pièce de préhension étant bloquée en rotation par la cloche de protection lorsque l'outil est monté sur le pied de mixage.

Une telle caractéristique présente l'avantage de permettre la manipulation de l'outil par la pièce de préhension, cette dernière restant immobile lorsque l'outil est monté à l'intérieur de la cloche de protection.

Selon une autre caractéristique de l'invention, l'outil est fixé de manière amovible au pied de mixage au moyen de la pièce de préhension, la pièce de préhension comportant des éléments d'ancrage venant coopérer avec des éléments de forme complémentaire présents sur la surface de la cloche.

Une telle caractéristique présente l'avantage de permettre une fixation simple de l'outil rotatif.

Selon une autre caractéristique de l'invention, la pièce de préhension épouse sensiblement la forme de la surface de la cloche.

Une telle caractéristique permet une parfaite intégration de la pièce de préhension dans la cloche de protection lorsque l'outil est monté sur le pied de mixage.

Selon une autre caractéristique de l'invention, la pièce de préhension assure une protection périphérique de l'outil rotatif.

Une telle caractéristique présente l'avantage d'offrir une plus grande sécurité dans la manipulation de l'outil.

Selon une autre caractéristique de l'invention, la pièce de préhension présente la forme d'une coupelle épousant la forme de la cloche de protection du pied de mixage.

Selon encore une autre caractéristique de l'invention, les éléments d'ancrage sont constitués par des languettes élastiques coopérant avec des ouvertures de la cloche de protection.

Selon encore une autre caractéristique de l'invention, les éléments d'ancrage sont constitués par deux languettes élastiques en vis-à-vis présentant des bossages s'engageant dans des ouvertures de forme complémentaire de la cloche de protection, les deux languettes élastiques pouvant être déverrouillées en appuyant depuis l'extérieur de la cloche sur lesdits bossages.

L'invention concerne également un appareil électroménager comportant un boîtier renfermant un moteur électrique, caractérisé en ce que l'appareil comporte un pied de mixage tel que précédemment décrit.

L'invention se rapporte aussi à un outil destiné à être monté sur un pied de mixage tel que précédemment décrit, caractérisé en ce que l'outil est solidaire d'une pièce de préhension sur laquelle il est monté rotatif.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue de côté d'un mixeur ménager muni d'un pied de mixage selon un mode particulier de réalisation de l'invention ;
- la figure 2 est une vue en perspective du pied de mixage de la figure 1 avec l'outil rotatif démonté;
- la figure 3 est une vue similaire à la figure 2 avec l'outil monté sur le pied de mixage ;
- la figure 4 est une vue en coupe longitudinale, selon le plan passant par les deux boutons de déverrouillage, du pied de mixage de la figure 1 ;
- la figure 5 est une vue de dessus de l'outil rotatif avec sa cloche de préhension,
- la figure 6 est une vue en coupe de l'outil rotatif avec sa cloche de préhension selon la ligne VI-VI de la figure 5,
- les figures 7a à 7c représentent d'autres types d'outils rotatifs pouvant se monter sur le pied de mixage de la figure 1.

Seuls les éléments nécessaires à la compréhension de l'invention ont été représentés. Pour faciliter la lecture des dessins les mêmes éléments portent les mêmes références d'une figure à l'autre.

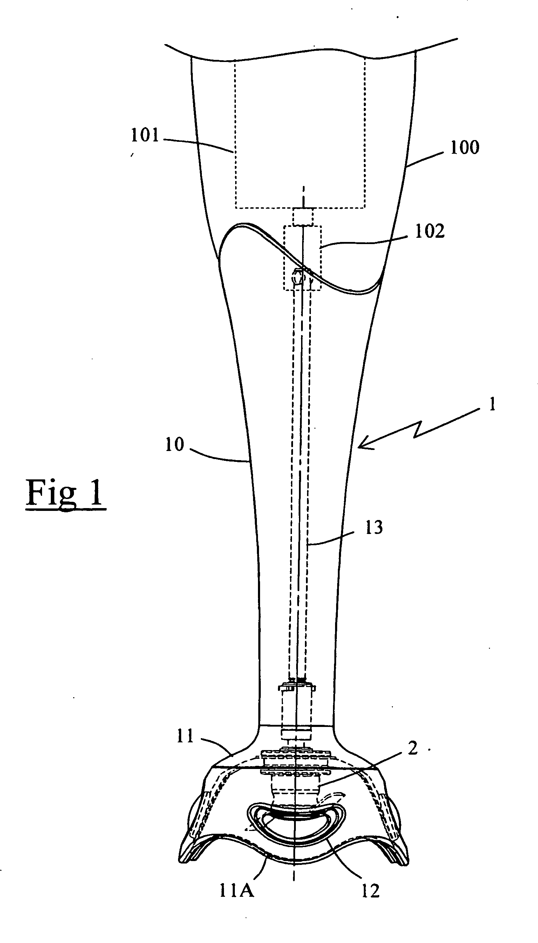

La figure 1 représente un mixeur ménager comportant un boîtier 100 renfermant, de manière connue en sol, un moteur 101 représenté schématiquement en pointillé sur la figure. Le moteur 101 est agencé selon l'axe longitudinal du boîtier 100 et possède un arbre de sortie muni d'un entraîneur rotatif 102 traversant une ouverture pratiquée dans la partie inférieure du boîtier 100.

Sur la partie inférieure du boîtier 100 est monté, de façon amovible ou non, un pied de mixage 1 comprenant un fût tubulaire 10 réalisé avantageusement en acier inox, le fût tubulaire ayant une partie supérieure comportant une pièce d'accouplement assurant le montage du pied de mixage 1 sur le boîtier 100.

La partie inférieure du pied de mixage comporte une cloche de protection 11 renfermant un outil de mixage 2, tel un couteau rotatif, entraîné en rotation par un arbre 13 s'étendant à l'intérieur du fût tubulaire 10 et dont l'extrémité supérieure vient s'accoupler avec l'entraîneur rotatif 102 du boîtier 100.

La cloche de protection 11 comporte un bord inférieur 11 A ondulé suivant l'axe longitudinal du pied de mixage de sorte que la cloche de protection 11 présente, en vue de côté, des lobes en alternance avec des parties échancrées. Les lobes de la cloche de protection 11 comportent des ouvertures latérales 12 en forme de haricot permettant la circulation des aliments lors de l'utilisation du mixeur.

Plus particulièrement selon l'invention, l'outil 2 de mixage est solidaire d'une pièce de préhension 20 permettant de manipuler l'outil 2 sans toucher à ses parties coupantes, l'outil 2 de mixage étant monté rotatif par rapport à la pièce de préhension 20.

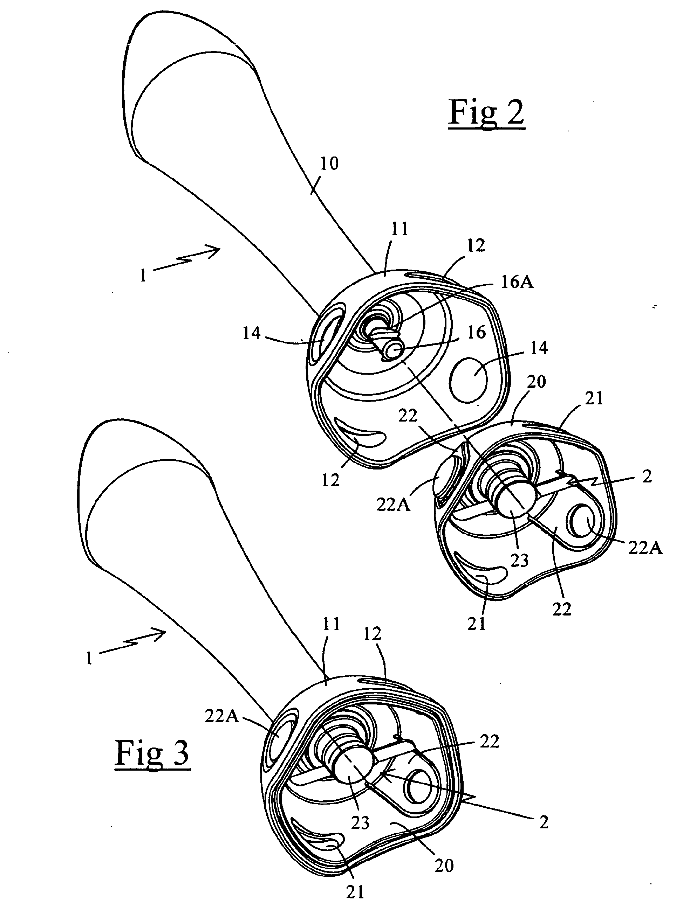

Conformément à la figure 2, la pièce de préhension 20 présente avantageusement la forme d'une coupelle enveloppant l'outil 2 et venant se fixer à la surface de la cloche 11.

De manière préférentielle, la coupelle 20 présente une taille et une forme adaptées pour s'insérer à l'intérieur de la cloche de protection 11 en épousant la forme de cette dernière, la coupelle 20 assurant une protection périphérique de l'outil 2 de mixage lorsque ce dernier est démonté du pied de mixage 1.

Cette coupelle 20 peut avantageusement être réalisée en matière plastique ou en matériau métallique, tel que de l'acier inox, et comporte des ouvertures oblongues 21 semblables aux ouvertures oblongues 12 de la cloche de protection 11 et venant en regard de ces dernières lorsque la coupelle 20 est insérée dans la cloche de protection 11.

La coupelle 20 est avantageusement munie de deux bras élastiques 22, découpés dans la paroi de la coupelle 20 et s'étendant sensiblement longitudinalement, ces deux bras élastiques 22 comportant une extrémité libre présentant un bossage circulaire 22A venant s'insérer dans une ouverture circulaire 14 présente sur la paroi de la cloche de protection 11, ainsi que cela est représenté sur la figure 3. La coupelle 20 est ainsi immobilisée par l'insertion des bossages 22A dans les ouvertures 14, sous le rappel élastique des bras 22, et peut être facilement enlevée de la cloche de protection 11 en appuyant sur les bossages 22A qui forment alors des boutons de déverrouillage.

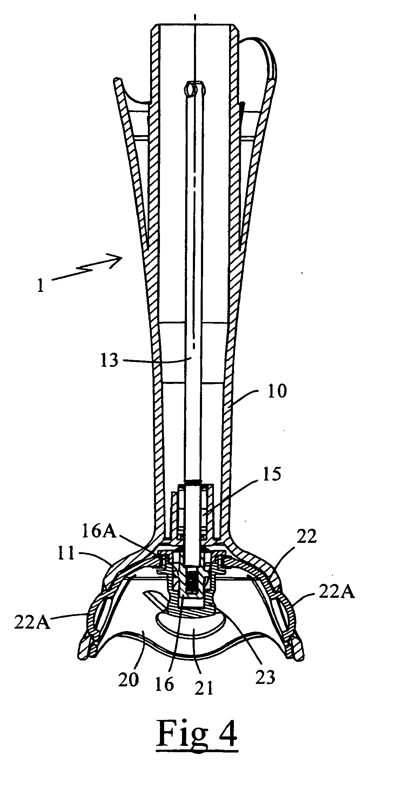

Conformément aux figures 4 à 6, l'arbre 13 du pied de mixage est guidé en rotation par un palier 15 porté par l'extrémité inférieure du fût tubulaire 10 et l'outil 2 de mixage comporte un moyeu 23 creux dans lequel s'engage un entraîneur 16 vissé à l'extrémité inférieure de l'arbre 13. De manière préférentielle, l'entraîneur 16 comporte des nervures hélicoïdales 16A coopérant avec des rainures 23A présentes dans le moyeu 23 pour entraîner en rotation l'outil 2.

Le moyeu 23 est rendu solidaire en translation de la coupelle 20 par deux épaulements 24 prenant place de part et d'autre d'une ouverture centrale de la coupelle 20 dont les bords sont recouverts par une bague 25 en matériau résistant favorisant le glissement, tel que de l'acier inox.

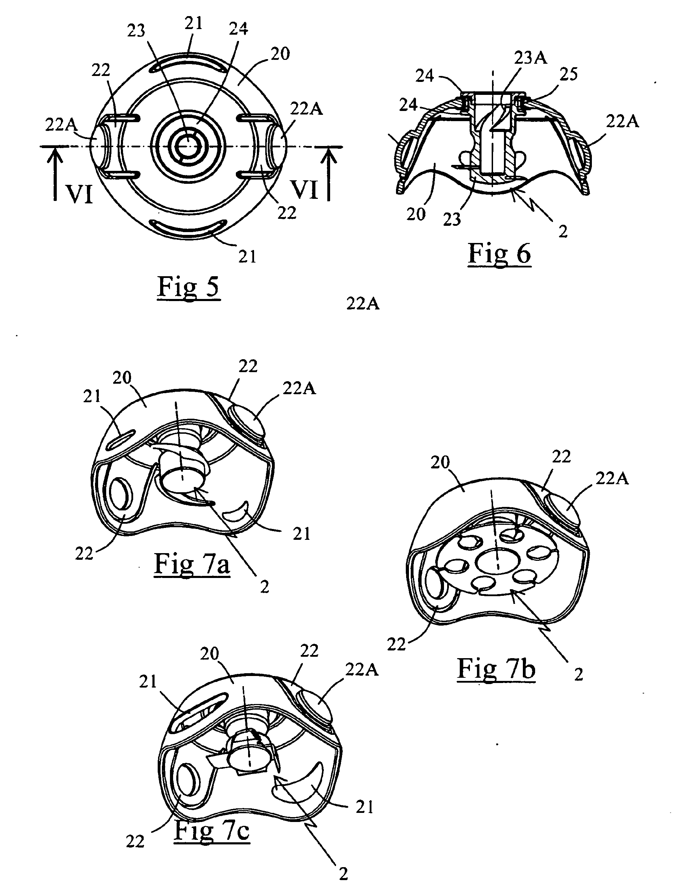

Un tel pied de mixage présente l'avantage de pouvoir être très facilement utilisé avec différents types d'outils, chaque outil 2 pouvant être associé à une coupelle 20 identique à celle précédemment décrite ou à une coupelle spécifique, optimisée pour fonctionner avec l'outil 2. En effet, la présence de la coupelle 20 de préhension permet d'adapter la section de passage des ouvertures 12 de la cloche de protection 11 en fonction de l'outil 2 utilisé. Ainsi, afin d'obtenir une meilleure efficacité de l'outil 2, la coupelle 20 peut avoir une paroi venant en regard de l'ouverture 12 oblongue venant boucher partiellement ou totalement cette dernière, ainsi que cela est illustré respectivement sur les figures 7a et 7b.

A titres d'exemples, l'outil illustré à la figure 7a est muni d'une lame coupante permettant de hacher les aliments, l'outil 2 illustré à la figure 7b est constitué par un disque présentant des ouvertures circulaires et est particulièrement adapté pour réaliser des mayonnaises ou des pâtes à crêpe. Enfin, L'outil illustré à la figure 7c permet la réalisation de glace pilée et permet de concasser les noix de muscade, noisettes etc...

Enfin, la coupelle 20 définie une chambre de mélange autour de l'outil rotatif 2 dont la forme est définie par la forme de la paroi intérieure de la coupelle 20 et qui peut donc également être adaptée à l'outil 2 associé. Ainsi, la forme de la coupelle pourra varier d'un outil à l'autre et pourra par exemple comporter des nervures spécifiques sur sa surface intérieure.

Un tel outil rotatif solidaire d'une coupelle de préhension présente l'avantage de pouvoir être monté et démonté facilement et très rapidement du pied de mixage, sans utiliser d'outils extérieurs. En particulier, la présence de la coupelle entourant l'outil rotatif simplifie grandement la préhension de l'outil et permet de monter ou de nettoyer l'outil sans risque de se blesser.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la forme de la pièce de préhension pourra se différencier de la forme de la cloche de protection et être au contact de cette dernière qu'en certains endroits.

Ainsi, dans une autre variante de réalisation non représentée, la pièce de préhension pourra être seulement constituée par une ou plusieurs languettes de préhension venant ou non se clipser élastiquement sur la cloche de protection.

Ainsi, dans une variante de réalisation le pied de mixage pourra être solidaire du boîtier moteur.

## Revendications

1. Pied de mixage (1) comprenant une cloche de protection (11) renfermant un outil (2) rotatif amovible, ledit outil (2) étant destiné à être entraîné par un moteur porté par un boîtier (100), **caractérisé en ce que** l'outil (2) est solidaire d'une pièce de préhension (20) sur laquelle il est monté rotatif, la pièce de préhension (20) étant bloquée en rotation par la cloche de protection (11) lorsque l'outil (2) est monté sur le pied de mixage (1).

2. Pied de mixage (1) selon la revendication 1, **caractérisé en ce que** ledit outil (2) est fixé de manière amovible au pied de mixage (1) au moyen de ladite pièce de préhension (20), ladite pièce de préhension (20) comportant des éléments d'ancrage (22) venant coopérer avec des éléments (14) de forme complémentaire présents sur la surface de la cloche (11).

3. Pied de mixage selon l'une quelconque des revendications 1 à 2, **caractérisé en ce que** ladite pièce de préhension (20) épouse sensiblement la forme de la surface de la cloche (11).

4. Pied de mixage selon l'une quelconque des revendication 1 à 3, **caractérisé en ce que** ladite pièce de préhension (20) assure une protection périphérique de l'outil rotatif (2).

5. Pied de mixage selon l'une quelconque des revendications 1 à 4, **caractérisé en ce que** ladite pièce de préhension (20) présente la forme d'une coupelle épousant la forme de la cloche de protection (11) du pied de mixage (1).

6. Pied de mixage selon l'une quelconque des revendication 2 à 5, **caractérisé en ce que** lesdits éléments d'ancrage sont constitués par des languettes élastiques (22) coopérant avec des ouvertures (14) de la cloche de protection.

7. Pied de mixage selon la revendication 6, **caractérisé en ce que** les éléments d'ancrage sont constitués par deux languettes élastiques (22) en vis-à-vis présentant des bossages (22A) s'engageant dans des ouvertures (14) de forme complémentaire de la cloche de protection (11), les deux languettes élastiques (22) pouvant être déverrouillées en appuyant depuis l'extérieur de la cloche sur lesdits bossages (22A).

8. Appareil électroménager comportant un boîtier (100) renfermant un moteur électrique, **caractérisé en ce que** ledit appareil comporte un pied de mixage (1) selon l'une quelconque des revendications 1 à 7.

9. Outil (2) destiné à être monté sur un pied de mixage (1) selon l'une quelconque des revendications 1 à 7, **caractérisé en ce que** ledit outil (2) est solidaire d'une pièce de préhension (20) sur laquelle il est monté rotatif.

## Claims

1. A blender rod (1) having a protective bell (11) containing a removable rotary tool (2), said tool (2) being designed to be driven by a motor carried in a housing (100), the rod being **characterized in that** the tool (2) is secured to a grip part (20) on which it is mounted to rotate, the grip part (20) being prevented from rotating by the protective bell (11) when the tool (2) is mounted on the blender rod (1).

2. A blender rod (1) according to claim 1, **characterized in that** said tool (2) is fastened removably to the blender rod (1) by means of said grip part (20), said grip part (20) including anchor elements (22) that co-operate with elements (14) of complementary shape present on the surface of the bell (11).

3. A blender rod according to claim 1 or claim 2, **characterized in that** said grip part (20) matches substantially the shape of the surface of the bell (11).

4. A blender rod according to any one of claims 1 to 3, **characterized in that** said grip part (20) provides peripheral protection for the rotary tool (2).

5. A blender rod according to any one of claims 1 to 4, **characterized in that** said grip part (20) is in the form of a cup matching the shape of the protective bell (11) of the blender rod.

6. A blender rod according to any one of claims 2 to 5, **characterized in that** said anchor elements are constituted by resilient tongues (22) co-operating with openings (14) in the protective bell.

7. A blender rod according to claim 6, **characterized in that** the anchor elements are constituted by two facing resilient tongues (22) presenting studs (22A) that engage in openings (14) of complementary shape in the protective bell (11), the two resilient tongues (22) being capable of being unlocked by pressing on said studs (22A) from outside the bell.

8. A domestic electric appliance comprising a housing (100) containing an electric motor, **characterized in that** said appliance includes a blender rod (1) according to any one of claims 1 to 7.

9. A tool (2) for mounting on a blender rod (1) according to any one of claims 1 to 7, **characterized in that** said tool (2) is secured to a grip part (20) on which it is mounted to rotate.

## Patentansprüche

1. Mixstab (1) mit einer Schutzglocke (11), die ein abnehmbares drehbares Werkzeug (2) einschließt, wobei das Werkzeug (2) dazu bestimmt ist, durch einen von einem Gehäuse getragenen Motor (100) angetrieben zu werden, **dadurch gekennzeichnet, dass** das Werkzeug (2) mit einem Greifteil (20) fest verbunden ist, an welchem es drehbar angebracht ist, wobei der Greifteil (20) durch die Schutzglocke (11) drehblockiert ist, wenn das Werkzeug (2) auf dem Mixstab (1) angebracht ist.

2. Mixstab (1) nach Anspruch 1, **dadurch gekennzeichnet, dass** das Werkzeug (2) am Mixstab (1) mittels des Greifteils (20) abnehmbar befestigt ist, wobei der Greifteil (20) Verankerungselemente (22) aufweist, die mit Elementen (14) mit komplementärer Form zusammenwirken, die an der Oberfläche der Glocke (11) vorhanden sind.

3. Mixstab nach einem der Ansprüche 1 bis 2, **dadurch gekennzeichnet, dass** der Greifteil (20) sich im Wesentlichen an die Form der Oberfläche der Glocke (11) anschmiegt.

4. Mixstab nach einem der Ansprüche 1 bis 3, **dadurch gekennzeichnet, dass** der Greifteil (20) einen umlaufenden Schutz des drehbaren Werkzeugs (2) gewährleistet.

5. Mixstab nach einem der Ansprüche 1 bis 4, **dadurch gekennzeichnet, dass** der Greifteil (20) die Form einer Schale aufweist, die sich an die Form der Schutzglocke (11) des Mixstabs (1) anschmiegt.

6. Mixstab nach einem der Ansprüche 2 bis 5, **dadurch gekennzeichnet, dass** die Verankerungselemente aus elastischen Zungen (22) bestehen, die mit Öffnungen (15) der Schutzglocke zusammenwirken.

7. Mixstab nach Anspruch 6, **dadurch gekennzeichnet, dass** die Verankerungselemente aus zwei gegenüberliegenden elastischen Zungen (22) bestehen, die Erhebungen (22A) aufweisen, welche in Öffnungen (14) mit komplementärer Form der Schutzglocke (11) eingreifen, wobei die beiden elastischen Zungen (22) entriegelt werden können, indem von der Außenseite der Glocke auf die Erhebungen (22A) gedrückt wird.

8. Elektrohaushaltsgerät mit einem Gehäuse (100), das einen Elektromotor einschließt, **dadurch gekennzeichnet, dass** das Gerät einen Mixstab (1) nach einem der Ansprüche 1 bis 7 aufweist.

9. Werkzeug (2), das zum Anbringen auf einem Mixstab (1) nach einem der Ansprüche 1 bis 7 bestimmt ist, **dadurch gekennzeichnet, dass** das Werkzeug (2) mit einem Greifteil (20) fest verbunden ist, auf welchem es drehbar angebracht ist.
